# EUROPÄISCHE PATENTSCHRIFT

(11) **EP 3 783 452 B1**
(45) Veröffentlichungstag und Bekanntmachung des Hinweises auf die Patenterteilung: **06.08.2025**
(21) Anmeldenummer: 19192743.3
(22) Anmeldetag: 21.08.2019
(51) Int. Cl.: G06N 3/084, G06V 10/82, G06V 20/56

(54) **COMPUTERIMPLEMENTIERTES VERFAHREN UND TESTEINHEIT ZUM APPROXIMIEREN VON TESTERGEBNISSEN UND VERFAHREN ZUM BEREITSTELLEN EINES TRAINIERTEN, KÜNSTLICHEN NEURONALEN NETZES**
COMPUTER-IMPLEMENTED METHOD AND TEST UNIT FOR APPROXIMIZING TEST RESULTS AND METHOD FOR PROVIDING A TRAINED, ARTIFICIAL NEURAL NETWORK
PROCÉDÉ MIS EN OEUVRE PAR ORDINATEUR ET UNITÉ D'ESSAI PERMETTANT D'APPROXIMER LES RÉSULTATS D'ESSAI ET PROCÉDÉ DE FOURNITURE D'UN RÉSEAU NEURONAL ARTIFICIEL APPRIS

(43) Veröffentlichungstag der Anmeldung: 24.02.2021
(73) Patentinhaber: dSPACE GmbH, 33102 Paderborn (DE)
(72) Erfinder: Bannenberg, Sebastian, 33102 Paderborn (DE); Lorenz, Fabian, 33102 Paderborn (DE); Rasche, Rainer, 33102 Paderborn (DE)

(56) Entgegenhaltungen:
- LI-HUA LUO ET AL: "Model predictive control for adaptive cruise control with multi-objectives: comfort, fuel-economy, safety and car-following", JOURNAL OF ZHEJIANG UNIVERSITY SCIENCE A, vol. 11, no. 3, 12 February 2010 (2010-02-12), CN, pages 191 - 201, XP055669698, ISSN: 1673-565X, DOI: 10.1631/jzus.A0900374
- HOLZMANN H ET AL: "Representation of 3-D mappings for automotive control applications using neural networks and fuzzy logic", CONTROL APPLICATIONS, 1997., PROCEEDINGS OF THE 1997 IEEE INTERNATIONA L CONFERENCE ON HARTFORD, CT, USA 5-7 OCT. 1997, NEW YORK, NY, USA,IEEE, US, 5 October 1997 (1997-10-05), pages 229 - 234, XP010250906, ISBN: 978-0-7803-3876-0, DOI: 10.1109/CCA.1997.627544
- SHENGBO LI ET AL: "Model Predictive Multi-Objective Vehicular Adaptive Cruise Control", IEEE TRANSACTIONS ON CONTROL SYSTEMS TECHNOLOGY., vol. 19, no. 3, May 2011 (2011-05-01), US, pages 556 - 566, XP055669567, ISSN: 1063-6536, DOI: 10.1109/TCST.2010.2049203
- JUN LI ET AL: "Survey on Artificial Intelligence for Vehicles", AUTOMOTIVE INNOVATION, vol. 1, no. 1, 19 March 2018 (2018-03-19), pages 2 - 14, XP055669406, ISSN: 2096-4250, DOI: 10.1007/s42154-018-0009-9

## Beschreibung

Die vorliegende Erfindung betrifft ein computerimplementiertes Verfahren zum Approximieren von Testergebnissen eines virtuellen Tests einer Vorrichtung zur zumindest teilweisen autonomen Führung eines Kraftfahrzeugs.

Die vorliegende Erfindung betrifft des Weiteren ein computerimplementiertes Verfahren zum Bereitstellen eines trainierten, künstlichen neuronalen Netzes zum Approximieren von Testergebnissen eines virtuellen Tests einer Vorrichtung zur zumindest teilweisen autonomen Führung eines Kraftfahrzeugs.

Die Erfindung betrifft überdies eine Testeinheit zum Approximieren von Testergebnissen eines virtuellen Tests einer Vorrichtung zur zumindest teilweisen autonomen Führung eines Kraftfahrzeugs. Die vorliegende Erfindung betrifft ferner ein Computerprogramm und einen computerlesbaren Datenträger.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Der Aufwand, insbesondere der Zeit- und/oder Kostenaufwand, zum Testen derartiger Fahrzeugfunktionen unter Verwendung der oben genannten Überprüfungsmethoden ist dabei typischerweise sehr hoch, da eine große Anzahl potenziell möglicher Fahrsituationen getestet werden muss.

Dies kann insbesondere zu einem hohen Aufwand für Testfahrten als auch für Simulationen führen.

Die Schrift "Model predictive control for adaptive cruise control with multi-objectives: comfort, fuel-economy, safety and car-follwing" von LI-HUA LUO ET AL. beschreibt einen "Adaptive Cruise Control" (ACC) Algorithmus welcher auf einem Model Predictive Control Framework (MPC) basiert. Durch das MPC werden Approximationen bezüglich der Ausgestaltung der Fahrfunktionen durchgeführt, aber es wird kein Verfahren angegeben, welches insbesondere den Zeitund/oder Kostenaufwand, zum Testen derartiger Fahrzeugfunktionen betrachtet und reduziert.

Das Dokument "Representation of 3-D mappings for automotive control applications using neural networks and fuzzy logic" von HOLZMANN H ET AL. zeigt die Modellierung und Simulation eines Motors durch ein Multi-Layer Perzeptron und einem radialen Basis Funktionsnetzwerk.

Darüber hinaus offenbart die Schrift "Model Predictive Multi-Objective Vehicular Adaptive Cruise Control" von SHENGBO LI ET AL. ebenfalls einen "Adaptive Cruise Control" (ACC) Algorithmus welcher auf einem Model Predictive Control Framework (MPC) basiert.

DE 10 2017 200 180 A1 gibt ein Verfahren zur Verifizierung und/oder Validierung einer Fahrzeugfunktion an, welche dafür vorgesehen ist, ein Fahrzeug in Längs- und/oder Querrichtung autonom zu führen.

Das Verfahren umfasst ein Ermitteln, auf Basis von Umfelddaten bezüglich eines Umfelds des Fahrzeugs, einer Test-Steueranweisung der Fahrzeugfunktion an einen Aktuator des Fahrzeugs, wobei die Test-Steueranweisung nicht durch den Aktuator umgesetzt wird.

Das Verfahren umfasst des Weiteren ein Simulieren, auf Basis von Umfelddaten und unter Verwendung eines Verkehrsteilnehmer-Modells bezüglich zumindest eines Verkehrsteilnehmers im Umfeld des Fahrzeugs, einer fiktiven Verkehrssituation, die vorliegen würde, wenn die Test-Steueranweisung umgesetzt worden wäre.

Das Verfahren umfasst ferner ein Bereitstellen von Testdaten in Bezug auf die fiktive Verkehrssituation. Die Fahrzeugfunktion wird hierbei zum Ermitteln der Test-Steueranweisung passiv im Fahrzeug betrieben.

Nachteilhaft an diesem Verfahren ist, dass zur Verifizierung und/oder Validierung der Fahrzeugfunktion ein tatsächlicher Betrieb des Fahrzeugs zum Ermitteln der benötigten Daten erforderlich ist.

Demzufolge besteht ein Bedarf, bestehende Verfahren und Testeinrichtungen dahingehend zu verbessern, dass sogenannte Testfälle im Rahmen eines Szenario-basierten Testens für Systeme und Systemkomponenten im hochautomatisierten Fahren in effizienter Weise ermittelt werden können.

Es ist daher Aufgabe der Erfindung, ein Verfahren, eine Testeinheit, ein Computerprogramm und einen computerlesbaren Datenträger anzugeben, welche Testfälle im Rahmen eines Szenario-basierten Testens für Systeme und Systemkomponenten im hochautomatisierten Fahren in effizienter Weise ermitteln können.

### Offenbarung der Erfindung

Die Aufgabe wird erfindungsgemäß gelöst durch ein computerimplementiertes Verfahren zum Approximieren von Testergebnissen eines virtuellen Tests einer Vorrichtung zur zumindest teilweisen autonomen Führung eines Kraftfahrzeugs nach Patentanspruch 1, ein computerimplementiertes Verfahren zum Bereitstellen eines trainierten, künstlichen neuronalen Netzes zum Approximieren von Testergebnissen eines virtuellen Tests einer Vorrichtung zur zumindest teilweisen autonomen Führung eines Kraftfahrzeugs nach Patentanspruch 9, eine Testeinheit zum Approximieren von Testergebnissen eines virtuellen Tests einer Vorrichtung zur zumindest teilweisen autonomen Führung eines Kraftfahrzeugs nach Patentanspruch 12, ein Computerprogramm nach Patentanspruch 14 und einen computerlesbaren Datenträger nach Patentanspruch 15.

Die Erfindung betrifft ein computerimplementiertes Verfahren zum Approximieren von Testergebnissen eines virtuellen Tests einer Vorrichtung zur zumindest teilweisen autonomen Führung eines Kraftfahrzeugs.

Das Verfahren umfasst ein Empfangen eines ersten Datensatzes umfassend eine Mehrzahl von Fahrsituationsparametern bestehend aus die Umgebung des Kraftfahrzeugs beschreibenden Umgebungsparametern und den Zustand des Kraftfahrzeugs beschreibenden Egoparametern, wobei jeder Fahrsituationsparameter einen vorgegebenen Definitionsbereich aufweist.

Das Verfahren umfasst des Weiteren ein Approximieren eines numerischen Wertebereichs einer Zielfunktion für den Definitionsbereich zumindest eines Fahrsituationsparameters unter Verwendung eines trainierten, künstlichen neuronalen Netzes, welches auf die Mehrzahl von Fahrsituationsparametern angewendet wird, wobei die Zielfunktion ein Fahrmanöver eines Kraftfahrzeugs in Reaktion auf eine durch die Mehrzahl von Fahrsituationsparametern des Definitionsbereichs erzeugten Steuerung der Vorrichtung repräsentiert. Das Verfahren umfasst überdies ein Bereitstellen eines zweiten Datensatzes bestehend aus dem numerischen Wertebereich der Zielfunktion und dem zugeordneten Definitionsbereich des zumindest einen Fahrsituationsparameters.

Die vorliegende Erfindung ist somit in vorteilhafter Weise in der Lage, mithilfe eines künstlichen neuronalen Netzes die Simulation von Fahrsituationen und/oder Fahrsituationsparametern zu ersetzen.

Im Rahmen des vorliegenden Verfahrens wird demnach in vorteilhafter Weise ein künstliches neuronales Netz eingesetzt, welches zur Aufgabe hat, Testergebnisse zu approximieren. Bei diesen Testergebnissen handelt es sich um Testergebnisse von Interesse, welche Gegenstand virtueller Tests einer Vorrichtung, z.B. eines Steuergeräts, zur autonomen Führung eines Kraftfahrzeugs sein sollen.

Beim Szenario-basierten Testen von Systemen und Systemkomponenten zur autonomen Führung eines Kraftfahrzeugs werden Szenarien definiert, welche als Abstraktion einer Verkehrssituation bezeichnet werden können. Ein logisches Szenario ist hierbei die Abstraktion einer Verkehrssituation mit der Straße, dem Fahrverhalten und dem umliegenden Verkehr ohne konkrete Parameterwerte.

Durch die Wahl konkreter Parameterwerte wird aus dem logischen Szenario ein konkretes Szenario. Ein solches konkretes Szenario entspricht einer jeweils einzelnen Verkehrssituation.

Eine autonome Fahrfunktion ist durch ein System, beispielsweise ein Steuergerät, realisiert. Das Steuergerät wird herkömmlicherweise im realen Fahrzeug in realen Verkehrssituationen getestet oder alternativ durch virtuelle Tests validiert.

Das vorliegende Verfahren approximiert in diesem Kontext Testergebnisse bzw. Verkehrssituationen von Interesse innerhalb eines vorgegebenen Definitionsbereichs der verwendeten Fahrsituationsparameter. Der Definitionsbereich der Fahrsituationsparameter wird hierbei derart gewählt, dass dieser beispielsweise sicherheitsrelevante Fahrsituationen wie beispielsweise Kollisionen oder Beinahe-Kollisionen beteiligter Fahrzeuge abdeckt.

Die derart approximierten Testergebnisse können anschließend in vorteilhafter Weise im Rahmen von virtuellen Tests des Steuergeräts validiert werden, sodass durch das erfindungsgemäße Verfahren ein effizientes virtuelles Validieren von Steuergeräten zur autonomen Führung von Kraftfahrzeugen möglich ist.

Weitere Ausführungsformen der vorliegenden Erfindung sind Gegenstand der weiteren Unteransprüche und der nachfolgenden Beschreibung unter Bezugnahme auf die Figuren.

Gemäß einem Aspekt der Erfindung umfasst das erfindungsgemäße Verfahren ferner, dass die Egoparameter eine Geschwindigkeit des Kraftfahrzeugs und die Umgebungsparameter eine Geschwindigkeit eines weiteren Kraftfahrzeugs und einen Abstand zwischen dem Kraftfahrzeug und dem weiteren Kraftfahrzeug umfassen.

Unter Verwendung dieser Parameter kann somit in vorteilhafter Weise ein sogenanntes Cut-In-Szenario approximiert werden. Das Cut-In-Szenario kann als Verkehrssituation bezeichnet werden, bei welcher ein hochautomatisiertes bzw. autonomes Fahrzeug in einer vorgegebenen Fahrspur fährt und ein anderes Fahrzeug mit gegenüber dem Ego-Fahrzeug verringerter Geschwindigkeit von einer weiteren Fahrspur in die Fahrspur des Ego-Fahrzeugs in einem bestimmten Abstand einschert.

Die Geschwindigkeit des Ego-Fahrzeugs und des weiteren Fahrzeugs, welches auch als Fellow-Fahrzeug bezeichnet wird, ist dabei konstant. Da die Geschwindigkeit des Ego-Fahrzeugs höher ist als die des Fellows, muss das Ego-Fahrzeug abgebremst werden, um eine Kollision der beiden Fahrzeuge zu vermeiden.

Auf Basis vorstehend genannter Egoparameter und Umgebungsparameter können somit durch das erfindungsgemäße Verfahren relevante Verkehrssituationen in dem vorgegebenen Definitionsbereich vorstehend genannter Parameter approximiert werden.

Gemäß einem weiteren Aspekt der Erfindung umfasst das erfindungsgemäße Verfahren ferner, dass die Zielfunktion eine Sicherheits-Zielfunktion ist, welche einen numerischen Wert aufweist, der bei einem Sicherheitsabstand zwischen dem Kraftfahrzeug und dem weiteren Kraftfahrzeug von ≥ V_{FELLOW} x 0,55 einen Minimalwert aufweist, bei einer Kollision zwischen dem Kraftfahrzeug und dem weiteren Kraftfahrzeug einen Maximalwert aufweist, und bei einem Sicherheitsabstand zwischen dem Kraftfahrzeug und dem weiteren Kraftfahrzeug von ≤ V_{FELLOW} x 0,55 einen Wert aufweist, welcher größer als der Minimalwert ist.

Die Sicherheits-Zielfunktion gibt an, wie sicher die Verkehrssituation für das Ego-Fahrzeug abläuft. Sie wird folgendermaßen spezifiziert: Falls der Abstand zwischen dem Ego-Fahrzeug und dem Fellow-Fahrzeug immer größer oder gleich dem Sicherheitsabstand ist, ist der Funktionswert der Sicherheits-Zielfunktion 0.

Der Sicherheitsabstand kann als Abstand definiert werden, bei welchem in Abhängigkeit einer Geschwindigkeitsdifferenz des Ego-Fahrzeugs und des Fellow-Fahrzeugs sowie des Abstands zwischen dem Ego-Fahrzeug und dem Fellow-Fahrzeug stets eine sichere Bremsung des Ego-Fahrzeugs ohne das Auftreten einer Kollision mit dem Fellow-Fahrzeug möglich ist.

Ein solcher Abstand wird im vorliegenden Beispiel durch einen Wert in Metern definiert, der der Geschwindigkeit V_{FELLOW} x 0,55 entspricht.

Umso geringer der Abstand zwischen dem Ego-Fahrzeug und dem Fellow-Fahrzeug ist bzw. ab dem Unterschreiten des Sicherheitsabstands, geht der Zielfunktionswert mehr und mehr auf den Wert 1 zu. Falls eine Kollision des Ego-Fahrzeugs und des Fellow-Fahrzeugs vorliegt, ist der Abstand zwischen dem Ego-Fahrzeug und dem Fellow-Fahrzeug demzufolge kleiner oder gleich 0 und der Zielfunktionswert beträgt 1.

Gemäß einem weiteren Aspekt der Erfindung umfasst das erfindungsgemäße Verfahren darüber hinaus, dass die Zielfunktion eine Comfort-Zielfunktion oder eine Energieverbrauchs-Zielfunktion ist, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit eines Betrags der Änderung der Beschleunigung einen Wert zwischen dem Minimalwert und dem Maximalwert aufweist.

Mithilfe der Comfort-Zielfunktion können Aussagen darüber getroffen werden, wie angenehm ein Fahrmanöver für den Fahrer des Ego-Fahrzeugs ist. Starkes Beschleunigen oder Abbremsen und häufiges Wiederholen dieser Vorgänge wird als nicht komfortabel angesehen.

Die Änderungen der Beschleunigung werden als Ruck bezeichnet. Die Fahrsituation ist umso komfortabler, je kleiner der berechnete Wert der Comfort-Zielfunktion ist. Der Energieverbrauch ist im Falle einer Kollision des Ego-Fahrzeugs und des Fellow-Fahrzeugs ein festgelegter Maximalwert. Der Grund dafür ist, dass die Tankfüllung im Falle eines Kraftfahrzeugs mit Verbrennungsmotor und/oder eine Traktionsbatterie im Falle eines elektrisch betriebenen Fahrzeugs oder Hybridfahrzeugs bei einem Unfall in der Regel nicht mehr weiterverwendet werden kann.

Auf das Cut-In-Szenario bezogen liegen somit mögliche sicherheitsrelevante Testfälle zwischen Kollisions- und Nicht-Kollisionsfällen, welche anhand der jeweiligen Zielfunktionen, d.h. der Sicherheits-Zielfunktion, der Comfort-Zielfunktion und der Energieverbrauchs-Zielfunktion, definierbar sind.

Gemäß einem weiteren Aspekt der Erfindung umfasst das erfindungsgemäße Verfahren des Weiteren, dass die Mehrzahl von Fahrsituationsparametern, insbesondere die Geschwindigkeit des Kraftfahrzeugs und die Geschwindigkeit des weiteren Kraftfahrzeugs, innerhalb des vorgegebenen Definitionsbereichs durch einen Zufallsalgorithmus erzeugt werden.

Somit können die Mehrzahl von Fahrsituationsparametern, welche den Datensatz bilden, der zur Approximation der Testergebnisse verwendet wird, einfach und zeiteffizient erzeugt werden.

Gemäß einem weiteren Aspekt der Erfindung weist das erfindungsgemäße Verfahren ferner auf, dass zum Approximieren des numerischen Wertebereichs jeder Zielfunktion ein separates künstliches neuronales Netz verwendet wird, wobei individuelle Hyperparameter jedes künstlichen neuronalen Netzes in einer Datenbank hinterlegt sind.

Dadurch, dass zur Approximation jeder Zielfunktion ein separates künstliches neuronales Netz verwendet wird, kann das jeweils verwendete künstliche neuronale Netz spezifisch für eine bestmögliche Approximation der betreffenden Zielfunktion trainiert werden und ist somit in vorteilhafter Weise in der Lage, ein genaueres Approximationsergebnis im Vergleich zu einem künstlichen neuronalen Netz zu liefern, welches eine Mehrzahl von Zielfunktionen mittels eines gemeinsamen Algorithmus approximiert.

Gemäß einem weiteren Aspekt der Erfindung umfasst das erfindungsgemäße Verfahren darüber hinaus, dass das künstliche neuronale Netz in Abhängigkeit der Zielfunktion zwischen 2 bis 15 Schichten, zwischen 6 und 2048 Neuronen pro Schicht und als Aktivierungsfunktion ReLU, LeakyReLU oder ELU verwendet. Somit sind in der vorliegenden Konfiguration bestmögliche Approximationsergebnisse erreichbar.

Gemäß einem weiteren Aspekt der Erfindung umfasst das erfindungsgemäße Verfahren ferner, dass der zweite Datensatz bestehend aus dem numerischen Wertebereich der Zielfunktion und dem zugeordneten Definitionsbereich des zumindest einen Fahrsituationsparameters in Abhängigkeit einer Anzahl von Fahrsituationsparametern zweidimensional oder dreidimensional graphisch darstellbar ist.

Somit kann in vorteilhafter Weise ein Funktionsverlauf des approximierten numerischen Wertebereichs der Zielfunktion für den vorgegebenen Definitionsbereich der verwendeten Fahrsituationsparameter graphisch dargestellt werden. Dies ermöglicht die graphische Darstellung von Nicht-Kollisionsfällen, Kollisionsfällen und einer Grenze zwischen Nicht-Kollisionsfällen und Kollisionsfällen.

Die Erfindung betrifft des Weiteren ein computerimplementiertes Verfahren zum Bereitstellen eines trainierten, künstlichen neuronalen Netzes zum Approximieren von Testergebnissen eines virtuellen Tests einer Vorrichtung zur zumindest teilweisen autonomen Führung eines Kraftfahrzeugs.

Das Verfahren umfasst ein Empfangen eines ersten Datensatzes von Eingabe-Trainingsdaten umfassend eine Mehrzahl von Fahrsituationsparametern bestehend aus die Umgebung des Kraftfahrzeugs beschreibenden Umgebungsparametern und den Zustand des Kraftfahrzeugs beschreibenden Egoparametern, wobei jeder Fahrsituationsparameter einen vorgegebenen Definitionsbereich aufweist.

Das Verfahren umfasst ferner das Empfangen eines zweiten Datensatzes von Ausgabe-Trainingsdaten bestehend aus dem numerischen Wertebereich der Zielfunktion und dem zugeordneten Definitionsbereich des zumindest einen Fahrsituationsparameters, wobei die Ausgabe-Trainingsdaten mit den Eingabe-Trainingsdaten in Beziehung stehen.

Darüber hinaus umfasst das Verfahren ein Trainieren des künstlichen neuronalen Netzes zum Approximieren eines numerischen Wertebereichs der Zielfunktion für den Definitionsbereich zumindest eines Fahrsituationsparameters, wobei die Zielfunktion ein Fahrmanöver des Kraftfahrzeugs in Reaktion auf eine durch die Mehrzahl von Fahrsituationsparametern des Definitionsbereichs erzeugten Steuerung der Vorrichtung repräsentiert, basierend auf den Eingabe-Trainingsdaten und den Ausgabe-Trainingsdaten mit einer Trainingsberechnungseinheit.

Des Weiteren umfasst das Verfahren ein Bereitstellen des trainierten, künstlichen neuronalen Netzes zum Approximieren von Testergebnissen des virtuellen Tests der Vorrichtung zur zumindest teilweisen autonomen Führung des Kraftfahrzeugs.

Das derart trainierte, künstliche neuronale Netz ist somit in vorteilhafter Weise in der Lage, in Abhängigkeit einer Anzahl verwendeter Trainingsdatensätze und/oder Trainingsepisoden und der erfolgten Optimierung ein genaues Approximationsergebnis der zu approximierenden Zielfunktion zu erreichen.

Gemäß einem weiteren Aspekt der Erfindung umfasst das erfindungsgemäße Verfahren ferner, dass die Mehrzahl von Fahrsituationsparametern, insbesondere die Geschwindigkeit des Kraftfahrzeugs und die Geschwindigkeit des weiteren Kraftfahrzeugs, innerhalb des vorgegebenen Definitionsbereichs durch einen Zufallsalgorithmus und/oder durch eine Simulation erzeugt werden. Die Parametersätze von Fahrsituationsparametern sind somit in einfacher Art und Weise z.B. bei Verwendung eines künstlichen neuronalen Netzes durch Anwendung einer Zufallsfunktion innerhalb eines vorgegebenen Definitionsbereichs erzeugbar.

Gemäß einem weiteren Aspekt der Erfindung umfasst das erfindungsgemäße Verfahren des Weiteren, dass das künstliche neuronale Netz durch Gewichtungseinstellungen einer Mehrzahl von Datensätzen von Fahrsituationsparametern unter Verwendung einer Gradientenabstiegs-Rückpropagation, insbesondere unter Verwendung des Adam-Optimierungsverfahrens, trainiert wird.

Erfolgt bei einem künstlichen neuronalen Netz eine Eingabe von Werten, werden die Ausgaben der Neuronen Schicht für Schicht berechnet und weitergeleitet, bis sie das Ende der Ausgabeschicht erreichen. Dies wird als Forward-Pass bezeichnet.

Es erfolgt ein Vergleich zwischen der tatsächlichen Ausgabe und der gewünschten Soll-Ausgabe, um einen Fehler zu bestimmen. Dies wird als Fehlerbestimmung bezeichnet. Die Soll-Ausgabe wird vom Datensatz vorgegeben und wird Soll-Wert genannt. Im einfachsten Fall kann der Fehler durch den Absolutwert der Differenz zwischen Ist- und Soll-Wert bestimmt werden. Dies wird als absoluter Fehler bezeichnet. Werden mehrere Datensätze betrachtet, kann der durchschnittliche absolute Fehler genutzt werden. Dafür werden die einzelnen absoluten Fehler summiert und durch die Anzahl der betrachteten Datensätze geteilt.

Im Falle von Klassifikationen wird als Genauigkeit meist der Prozentwert angegeben, wie oft die Ausgabe mit dem Soll-Wert übereinstimmt.

Der Fehler kann durch das gesamte Netz bis zur Eingangsschicht zurückgeführt werden. Da es das Ziel ist, den Fehler zu minimieren, kann mithilfe des Gradientenabstiegs-Verfahrens eine Aktualisierung der Gewichte in Richtung eines lokalen Minimums erfolgen. Dies wird als Backward-Pass bezeichnet.

Durch dieses Anpassen der Gewichte ist es dem neuronalen Netz möglich, das spezifische Problem immer besser zu lösen und seine Genauigkeit der Vorhersagen zu verbessern. Das Vorgehen von Forward-Pass, Fehlerbestimmung und Backward-Pass wird als Backpropagation bezeichnet. Eine einzelne Backpropagation-Abfolge wird als Trainingsschritt bezeichnet.

Bei dem Adam-Optimierungsverfahren werden unterschiedliche Lernraten für verschiedene Parameter verwendet. Diese können auch steigen. Zusätzlich werden diese Lernraten von einem Momentum beeinflusst. Dies bedeutet, dass aufeinanderfolgende Gewichtsaktualisierungen in dieselbe Gradientenrichtung eine höhere Lernrate zur Folge haben. Im Vergleich dazu wird bei einer Änderung der Gradientenrichtung bei aufeinanderfolgenden Aktualisierungen die Lernrate verringert.

Die Erfindung betrifft darüber hinaus eine Testeinheit zum Approximieren von Testergebnissen eines virtuellen Tests einer Vorrichtung zur zumindest teilweisen autonomen Führung eines Kraftfahrzeugs.

Die Testeinheit umfasst Mittel zum Empfangen eines ersten Datensatzes umfassend eine Mehrzahl von Fahrsituationsparametern bestehend aus die Umgebung des Kraftfahrzeugs beschreibenden Umgebungsparametern und den Zustand des Kraftfahrzeugs beschreibenden Egoparametern, wobei jeder Fahrsituationsparameter einen vorgegebenen Definitionsbereich aufweist.

Ferner umfasst die Testeinheit Mittel zum Approximieren eines numerischen Wertebereichs einer Zielfunktion für den Definitionsbereich zumindest eines Fahrsituationsparameters unter Verwendung eines trainierten, künstlichen neuronalen Netzes, welches auf die Mehrzahl von Fahrsituationsparametern angewendet wird, wobei die Zielfunktion ein Fahrmanöver des Kraftfahrzeugs in Reaktion auf eine durch die Mehrzahl von Fahrsituationsparametern des Definitionsbereichs erzeugten Steuerung der Vorrichtung repräsentiert.

Die Testeinheit umfasst ferner Mittel zum Bereitstellen eines zweiten Datensatzes bestehend aus dem numerischen Wertebereich der Zielfunktion und dem zugeordneten Definitionsbereich des zumindest einen Fahrsituationsparameters.

Im Rahmen der vorliegenden Testeinheit wird demnach in vorteilhafter Weise ein künstliches neuronales Netz eingesetzt, welches zur Aufgabe hat, Testergebnisse in Abhängigkeit des vorgegebenen Definitionsbereichs der Fahrsituationsparameter von Interesse zu approximieren.

Die derart approximierten Testergebnisse können anschließend in vorteilhafter Weise im Rahmen von virtuellen Tests der Vorrichtung validiert werden, sodass durch die erfindungsgemäße Testeinheit ein effizientes virtuelles Validieren der Vorrichtung zur autonomen Führung von Kraftfahrzeugen möglich ist.

Gemäß einem weiteren Aspekt der Erfindung ist vorgesehen, dass eine der Approximation der Testergebnisse des virtuellen Tests der, insbesondere als Steuereinheit ausgebildeten, Vorrichtung zugrunde liegende Fahrsituation ein Spurwechsel eines weiteren Kraftfahrzeugs in eine Fahrspur des Kraftfahrzeugs unter Verwendung der Mehrzahl von Fahrsituationsparametern ist.

Die Testeinheit ist somit in vorteilhafter Weise in der Lage, entsprechende Testergebnisse des virtuellen Tests im Hinblick auf beispielsweise ein Cut-In-Szenario zu approximieren.

Die Erfindung betrifft des Weiteren ein Computerprogramm mit Programmcode, um das erfindungsgemäße Approximationsverfahren durchzuführen, wenn das Computerprogramm auf einem Computer ausgeführt wird. Darüber hinaus betrifft die Erfindung einen computerlesbaren Datenträger mit Programmcode eines Computerprogramms, um das erfindungsgemäße Approximationsverfahren durchzuführen, wenn das Computerprogramm auf einem Computer ausgeführt wird.

Die hierin beschriebenen Merkmale des Verfahrens sind zur Approximation von Testergebnissen einer Vielzahl unterschiedlicher Szenarien bzw. Fahrsituationen verwendbar. Ebenfalls ist die erfindungsgemäße Testeinheit dazu ausgebildet, eine Vielzahl unterschiedlicher Vorrichtungen bzw. Steuergeräte von z.B. Automobilen, Nutzfahrzeugen und/oder kommerziellen Fahrzeugen, Schiffen oder Flugzeugen im Sinne einer Approximierung von Testergebnissen zu testen.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zum Approximieren von Testergebnissen eines virtuellen Tests einer Vorrichtung zur zumindest teilweisen autonomen Führung eines Kraftfahrzeugs gemäß einer bevorzugten Ausführungsform der Erfindung;
- Fig. 2: eine dreidimensionale Abbildung einer erfindungsgemäßen Zielfunktion gemäß der bevorzugten Ausführungsform der Erfindung;
- Fig. 3: eine dreidimensionale Abbildung einer weiteren erfindungsgemäßen Zielfunktion gemäß der bevorzugten Ausführungsform der Erfindung;
- Fig. 4: eine dreidimensionale Abbildung einer weiteren erfindungsgemäßen Zielfunktion gemäß der bevorzugten Ausführungsform der Erfindung;
- Fig. 5: ein Ablaufdiagramm des Verfahrens zum Approximieren der Teilmenge von Testergebnissen des virtuellen Tests der Vorrichtung zur zumindest teilweisen autonomen Führung des Kraftfahrzeugs gemäß einer weiteren bevorzugten Ausführungsform der Erfindung;
- Fig. 6: ein Ablaufdiagramm des Verfahrens zum Approximieren der Teilmenge von Testergebnissen des virtuellen Tests der Vorrichtung zur zumindest teilweisen autonomen Führung des Kraftfahrzeugs gemäß einer weiteren bevorzugten Ausführungsform der Erfindung;
- Fig. 7: ein Ablaufdiagramm eines Verfahrens zum Bereitstellen eines trainierten, künstlichen neuronalen Netzes zum Approximieren von Testergebnissen eines virtuellen Tests einer Vorrichtung zur zumindest teilweisen autonomen Führung eines Kraftfahrzeugs; und
- Fig. 8: eine Testeinheit zum Approximieren von Testergebnissen eines virtuellen Tests einer Vorrichtung zur zumindest teilweisen autonomen Führung eines Kraftfahrzeugs.

Sofern nicht anders angegeben, bezeichnen gleiche Bezugszeichen gleiche Elemente der Zeichnungen.

### Ausführliche Beschreibung der Ausführungsformen

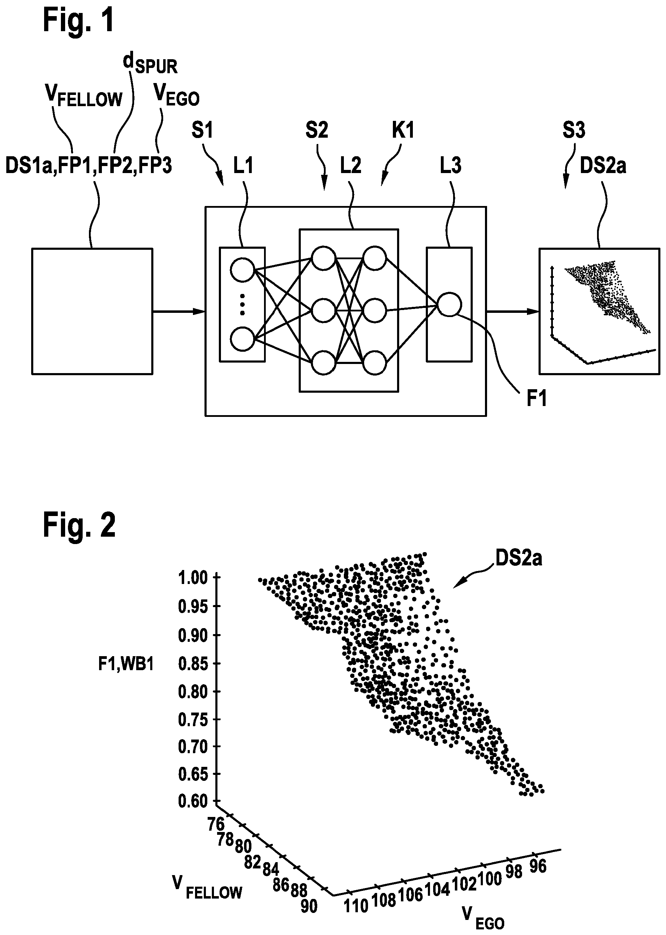

Fig. 1 zeigt ein Ablaufdiagramm eines Verfahrens zum Approximieren von Testergebnissen eines virtuellen Tests einer Vorrichtung zur zumindest teilweisen autonomen Führung eines Kraftfahrzeugs gemäß einer bevorzugten Ausführungsform der Erfindung.

Das Verfahren umfasst ein Empfangen S1 eines ersten Datensatzes DS1a, DS1b, DS1c umfassend eine Mehrzahl von Fahrsituationsparametern bestehend aus die Umgebung des Kraftfahrzeugs beschreibenden Umgebungsparametern FP1, FP2 und den Zustand des Kraftfahrzeugs beschreibenden Egoparametern FP3.

Jeder Fahrsituationsparameter weist einen vorgegebenen Definitionsbereich auf. Das Verfahren umfasst ferner ein Approximieren S2 eines numerischen Wertebereichs WB1, WB2, WB3 einer Zielfunktion F1, F2, F3 für den Definitionsbereich zumindest eines Fahrsituationsparameters unter Verwendung eines trainierten, künstlichen neuronalen Netzes K1.

Das künstliche neuronale Netz K1 wird auf die Mehrzahl von Fahrsituationsparametern angewendet. Die Zielfunktion F1, F2, F3 repräsentiert ein Fahrmanöver des Kraftfahrzeugs in Reaktion auf eine durch die Mehrzahl von Fahrsituationsparametern des Definitionsbereichs erzeugten Steuerung der Vorrichtung.

Darüber hinaus umfasst das Verfahren ein Bereitstellen eines zweiten Datensatzes DS2a, DS2b, DS2c bestehend aus dem numerischen Wertebereich WB1, WB2, WB3 der Zielfunktion F1, F2, F3 und dem zugeordneten Definitionsbereich des zumindest einen Fahrsituationsparameters.

Der oder die Egoparameter FP3 umfassen eine Geschwindigkeit V_{EGO} des Kraftfahrzeugs und die Umgebungsparameter FP1, FP2 umfassen eine Geschwindigkeit V_{FELLOW} eines weiteren Kraftfahrzeugs und einen Abstand d_{SPUR} zwischen dem Kraftfahrzeug und dem weiteren Kraftfahrzeug.

Die Mehrzahl von Fahrsituationsparametern, insbesondere die Geschwindigkeit V_{EGO} des Kraftfahrzeugs und die Geschwindigkeit V_{FELLOW} des weiteren Kraftfahrzeugs werden innerhalb des vorgegebenen Definitionsbereichs durch einen Zufallsalgorithmus erzeugt.

Das künstliche neuronale Netz K1 verwendet in Abhängigkeit der Zielfunktion F1 zwischen 2 bis 15 Schichten, zwischen 6 und 2048 Neuronen pro Schicht und als Aktivierungsfunktion ReLU. Alternativ kann beispielsweise als Aktivierungsfunktion LeakyReLU oder ELU verwendet werden.

Der zweite Datensatz DS2a besteht aus dem numerischen Wertebereich der Zielfunktion F1 und dem zugeordneten Definitionsbereich des zumindest einen Fahrsituationsparameters. In Abhängigkeit der Anzahl von Fahrsituationsparametern kann vorstehend genannter Wertebereich beispielsweise zweidimensional oder dreidimensional graphisch dargestellt werden.

Fig. 2 zeigt eine dreidimensionale Abbildung einer erfindungsgemäßen Zielfunktion gemäß der bevorzugten Ausführungsform der Erfindung.

Die dargestellte Zielfunktion F1 ist eine Sicherheits-Zielfunktion. Die Sicherheits-Zielfunktion weist einen durch das (in Fig. 1 gezeigte) künstliche neuronale Netz K1 approximierten numerischen Wert bzw. Funktionswert auf.

Der Funktionswert weist bei einem Sicherheitsabstand zwischen dem Kraftfahrzeug und dem weiteren Kraftfahrzeug von ≥ V_{FELLOW} x 0,55 einen Minimalwert auf. Ferner weist der Funktionswert bei einer Kollision zwischen dem Kraftfahrzeug und dem weiteren Kraftfahrzeug einen Maximalwert auf. Darüber hinaus weist der Funktionswert bei einem Sicherheitsabstand zwischen dem Kraftfahrzeug und dem weiteren Kraftfahrzeug von ≤ V_{FELLOW} x 0,55 einen Wert auf, welcher größer als der Minimalwert ist.

Der in Fig. 2 dargestellte Wertebereich WB1 des zweiten Datensatzes DS2a ist in der vorliegenden Darstellung dreidimensional gezeigt. Der Wertebereich lässt somit sehr gut die durch jeweilige Punkte dargestellten Einzelapproximationsergebnisse jeweiliger Parameterkombinationen der verwendeten Fahrsituationsparameter erkennen. Ebenso lässt sich beispielsweise aufgrund des dargestellten Funktionsverlaufs eine Grenze zwischen Kollisions- und Nicht-Kollisionsfällen ablesen.

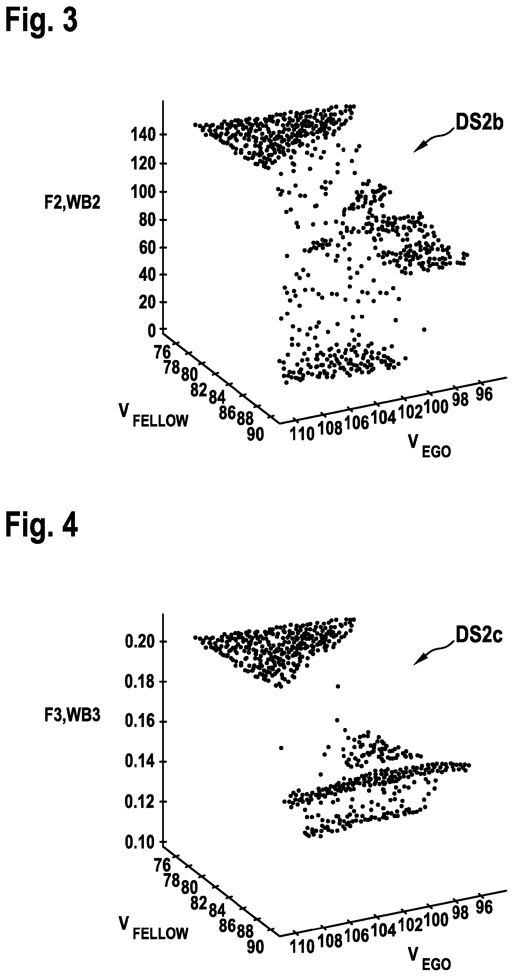

Fig. 3 zeigt eine dreidimensionale Abbildung einer weiteren erfindungsgemäßen Zielfunktion gemäß der bevorzugten Ausführungsform der Erfindung.

Die in Fig. 3 gezeigte Zielfunktion F2 ist eine Comfort-Zielfunktion, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit eines Betrags der Änderung der Beschleunigung einen Wert zwischen dem Minimalwert und dem Maximalwert aufweist.

Der in Fig. 3 dargestellte numerische Wertebereich der Comfort-Zielfunktion von 0 bis 140 ist hierbei beliebig gewählt und kann alternativ einen anderen Wertebereich aufweisen.

Anhand des dargestellten Wertebereichs kann somit bestimmt werden, ob die dargestellten Werte in einem Bereich liegen, in welchem eine Kollision des Fahrzeugs mit dem weiteren Fahrzeug auftritt, indem keine Kollision zwischen dem Fahrzeug und dem weiteren Fahrzeug auftritt oder der numerische Funktionswert in einem Zwischenbereich liegt.

Fig. 4 zeigt eine dreidimensionale Abbildung einer weiteren erfindungsgemäßen Zielfunktion gemäß der bevorzugten Ausführungsform der Erfindung.

Die in Fig. 4 gezeigte Zielfunktion F3 ist eine Energieverbrauchs-Zielfunktion, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit eines Betrags der Änderung der Beschleunigung einen Wert zwischen dem Minimalwert und dem Maximalwert aufweist.

Der in Fig. 4 dargestellte numerische Wertebereich der Comfort-Zielfunktion von 0,1 bis 0,2 ist hierbei beliebig gewählt und kann alternativ einen anderen Wertebereich aufweisen.

Anhand des dargestellten Wertebereichs kann somit bestimmt werden, ob die dargestellten Werte in einem Bereich liegen, in welchem eine Kollision des Fahrzeugs mit dem weiteren Fahrzeug auftritt, indem keine Kollision zwischen dem Fahrzeug und dem weiteren Fahrzeug auftritt oder der numerische Funktionswert in einem Zwischenbereich liegt.

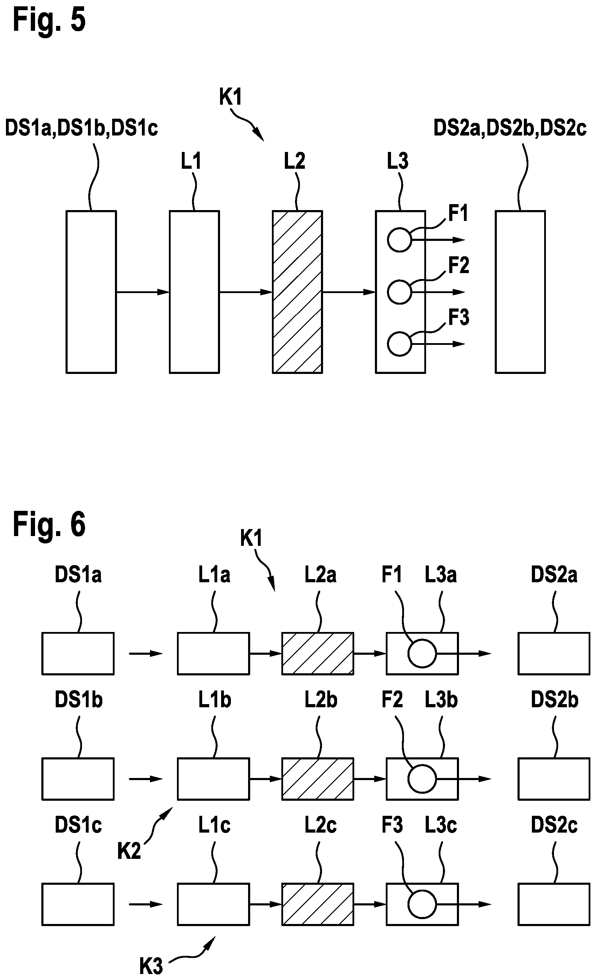

Fig. 5 zeigt ein Ablaufdiagramm des Verfahrens zum Approximieren der Teilmenge von Testergebnissen des virtuellen Tests der Vorrichtung zur zumindest teilweisen autonomen Führung des Kraftfahrzeugs gemäß einer weiteren bevorzugten Ausführungsform der Erfindung;

Das in Fig. 5 dargestellte künstliche neuronale Netz K1 weist eine Eingabeschicht L1, eine Mehrzahl versteckter Schichten L2 und eine Ausgabeschicht L3 auf. Die Ausgabe des künstlichen neuronalen Netzes K1 sind ein erster Funktionswert F1, ein zweiter Funktionswert F2 und ein dritter Funktionswert F3.

Der erste Funktionswert F1 betrifft eine Sicherheits-Zielfunktion, der zweite Funktionswert F2 betrifft eine Comfort-Zielfunktion und der dritte Funktionswert F3 betrifft eine Energieverbrauchs-Zielfunktion.

Das künstliche neuronale Netz K1 ist somit in der Lage, basierend auf einem ersten Datensatz DS1a der Sicherheits-Zielfunktion den Funktionswert F1 zu approximieren. Auf Basis des Funktionswerts der Zielfunktion F1 kann sodann der zweite Datensatz DS2a erzeugt werden, d.h. eine graphische Darstellung des numerischen Wertebereichs WB1 der Sicherheits-Zielfunktion durchgeführt werden.

Das künstliche neuronale Netz K1 empfängt einen ersten Datensatz DS1a betreffend die Sicherheits-Zielfunktion, einen zweiten Datensatz DS2a betreffend die Comfort-Zielfunktion und einen dritten Datensatz betreffend die Energieverbrauchs-Zielfunktion.

Die Datensätze DS1a, DS1b, DS1c weisen jeweils eine Mehrzahl von Fahrsituationsparametern bestehend aus die Umgebung des Kraftfahrzeugs beschreibenden Umgebungsparametern FP1, FP2 und den Zustand des Kraftfahrzeugs beschreibenden Egoparametern FP3 auf.

Auf Basis der durch das künstliche neuronale Netz approximierten Funktionswerte K1 kann anschließend ein zweiter Datensatz DS2a, DS2b, DS2c bestehend aus dem numerischen Wertebereich WB1, WB2, WB3 der Zielfunktion F1, F2, F3 und dem zugeordneten Definitionsbereich des zumindest einen Fahrsituationsparameters erzeugt werden.

Fig. 6 zeigt ein Ablaufdiagramm des Verfahrens zum Approximieren der Teilmenge von Testergebnissen des virtuellen Tests der Vorrichtung zur zumindest teilweisen autonomen Führung des Kraftfahrzeugs gemäß einer weiteren bevorzugten Ausführungsform der Erfindung.

Im Gegensatz zu der in Fig. 5 dargestellten Ausführungsform werden in der vorliegenden Ausführungsform zum Approximieren des numerischen Wertebereichs WB1, WB2, WB3 jeder Zielfunktion F1, F2, F3 ein separates künstliches neuronales Netz K1, K2, K3 verwendet. Individuelle Hyperparameter jedes künstlichen neuronalen Netzes K1, K2, K3 sind in einer Datenbank hinterlegt.

Das erste neuronale Netz K1 weist eine Eingabeschicht L1a, eine Mehrzahl versteckter Schichten L2a und eine Ausgabeschicht L3a auf, welche den Funktionswert der Sicherheits-Zielfunktion F1 ausgibt.

Das erste künstliche neuronale Netz K1 empfängt ferner den ersten Datensatz DS1a. Auf Basis des approximierten Funktionswerts des ersten künstlichen neuronalen Netzes K1 kann sodann der zweite Datensatz DS2a erstellt werden, welcher aus dem numerischen Wertebereich der Zielfunktion F1 und dem zugehörigen Definitionsbereich des zumindest einen Fahrsituationsparameters besteht.

Das zweite neuronale Netz K2 weist eine Eingabeschicht L1b, eine Mehrzahl versteckter Schichten L2b und eine Ausgabeschicht L3b auf, welche den Funktionswert der Sicherheits-Zielfunktion F2 ausgibt.

Das zweite künstliche neuronale Netz K2 empfängt ferner den zweiten Datensatz DS1b. Auf Basis des approximierten Funktionswerts des zweiten künstlichen neuronalen Netzes K2 kann sodann der zweite Datensatz DS2b erstellt werden, welcher aus dem numerischen Wertebereich der Zielfunktion F2 und dem zugehörigen Definitionsbereich des zumindest einen Fahrsituationsparameters besteht.

Das dritte neuronale Netz K3 weist eine Eingabeschicht L1c, eine Mehrzahl versteckter Schichten L2c und eine Ausgabeschicht L3c auf, welche den Funktionswert der Sicherheits-Zielfunktion F3 ausgibt.

Das dritte künstliche neuronale Netz K3 empfängt ferner den dritten Datensatz DS1c. Auf Basis des approximierten Funktionswerts des dritten künstlichen neuronalen Netzes K3 kann sodann der zweite Datensatz DS2c erstellt werden, welcher aus dem numerischen Wertebereich der Zielfunktion F3 und dem zugehörigen Definitionsbereich des zumindest einen Fahrsituationsparameters besteht.

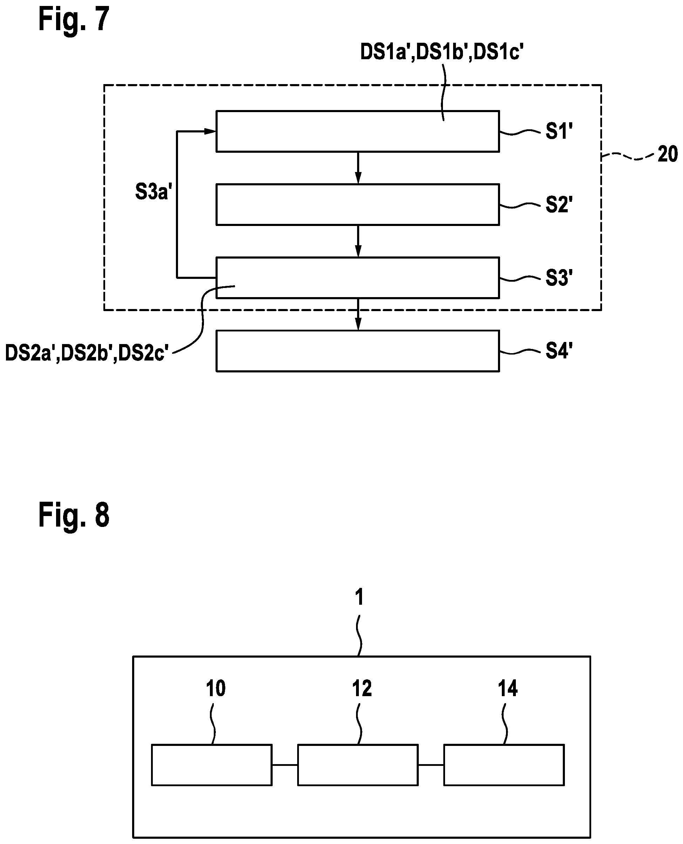

Fig. 7 zeigt ein Ablaufdiagramm eines Verfahrens zum Bereitstellen eines trainierten, künstlichen neuronalen Netzes zum Approximieren von Testergebnissen eines virtuellen Tests einer Vorrichtung zur zumindest teilweisen autonomen Führung eines Kraftfahrzeugs.

Das Verfahren umfasst ein Empfangen S1' eines ersten Datensatzes DS1a', DS1b', DS1c' von Eingabe-Trainingsdaten umfassend eine Mehrzahl von Fahrsituationsparametern bestehend aus die Umgebung des Kraftfahrzeugs beschreibenden Umgebungsparametern FP1, FP2 und den Zustand des Kraftfahrzeugs beschreibenden Egoparametern FP3. Jeder Fahrsituationsparameter weist einen vorgegebenen Definitionsbereich auf.

Darüber hinaus umfasst das Verfahren ein Empfangen S2' eines zweiten Datensatzes DS2a', DS2b', DS2c' von Ausgabe-Trainingsdaten bestehend aus dem numerischen Wertebereich WB1, WB2, WB3 der Zielfunktion F1, F2, F3 und dem zugeordneten Definitionsbereich des zumindest einen Fahrsituationsparameters. Die Ausgabe-Trainingsdaten stehen mit den Eingabe-Trainingsdaten in Beziehung.

Ferner weist das Verfahren den Schritt des Trainierens S3' des künstlichen neuronalen Netzes zum Approximieren eines numerischen Wertebereichs WB1, WB2, WB3 der Zielfunktion F1, F2, F3 für den Definitionsbereich zumindest eines Fahrsituationsparameters auf.

Die Zielfunktion F1, F2, F3 repräsentiert ein Fahrmanöver des Kraftfahrzeugs in Reaktion auf eine durch die Mehrzahl von Fahrsituationsparametern des Definitionsbereichs erzeugten Steuerung der Vorrichtung basierend auf den Eingabe-Trainingsdaten und den Ausgabe-Trainingsdaten. Die Approximation erfolgt mit einer Trainingsberechnungseinheit 20.

Darüber hinaus umfasst das Verfahren ein Bereitstellen S4' des trainierten, künstlichen neuronalen Netzes K1, K2, K3 zum Approximieren von Testergebnissen des virtuellen Tests der Vorrichtung zur zumindest teilweisen autonomen Führung des Kraftfahrzeugs.

Die Mehrzahl von Fahrsituationsparametern, insbesondere die Geschwindigkeit V_{EGO} des Kraftfahrzeugs und die Geschwindigkeit V_{FELLOW} des weiteren Kraftfahrzeugs werden innerhalb des vorgegebenen Definitionsbereichs durch einen Zufallsalgorithmus erzeugt. Alternativ können diese beispielsweise durch eine Simulation erzeugt werden.

Das künstliche neuronale Netz K1, K2, K3 wird durch Gewichtungseinstellungen einer Mehrzahl von Datensätzen von Fahrsituationsparametern unter Verwendung einer Gradientenabstiegs-Rückpropagation S3a', insbesondere unter Verwendung des Adam-Optimierungsverfahrens, trainiert.

Fig. 8 zeigt eine Testeinheit zum Approximieren von Testergebnissen eines virtuellen Tests einer Vorrichtung zur zumindest teilweisen autonomen Führung eines Kraftfahrzeugs.

Die Testeinheit umfasst Mittel 10 zum Empfangen eines ersten Datensatzes DS1a, DS1b, DS1c umfassend eine Mehrzahl von Fahrsituationsparametern bestehend aus die Umgebung des Kraftfahrzeugs beschreibenden Umgebungsparametern und den Zustand des Kraftfahrzeugs beschreibenden Egoparametern. Jeder Fahrsituationsparameter weist hierbei einen vorgegebenen Definitionsbereich auf.

Ferner weist die Testeinheit 1 Mittel 12 zum Approximieren eines numerischen Wertebereichs WB1, WB2, WB3 einer Zielfunktion F1, F2, F3 für den Definitionsbereich zumindest eines Fahrsituationsparameters unter Verwendung eines trainierten, künstlichen neuronalen Netzes K1, K2, K3 auf. Das künstliche neuronale Netz wird auf die Mehrzahl von Fahrsituationsparametern angewendet.

Die Zielfunktion F1, F2, F3 repräsentiert hierbei ein Fahrmanöver des Kraftfahrzeugs in Reaktion auf einen durch die Mehrzahl von Fahrsituationsparametern des Definitionsbereichs erzeugten Steuerung der Vorrichtung. Ferner weist die Testeinheit 1 Mittel 14 zum Bereitstellen eines zweiten Datensatzes DS2a, DS2b, DS2c bestehend aus dem numerischen Wertebereich WB1, WB2, WB3 der Zielfunktion F1, F2, F3 und dem zugeordneten Definitionsbereich des zumindest einen Fahrsituationsparameters auf.

Eine der Approximation der Testergebnisse des virtuellen Tests der, insbesondere als Steuereinheit ausgebildeten, Vorrichtung zugrunde liegende Fahrsituation ist im vorliegenden Ausführungsbeispiel ein Spurwechsel eines weiteren Kraftfahrzeugs in eine Fahrspur des Kraftfahrzeugs unter Verwendung der Mehrzahl von Fahrsituationsparametern.

Alternativ kann eine zugrunde liegende Fahrsituation eine andere Fahrsituation wie beispielsweise das Heranfahren an eine Ampel mit und/oder ohne Fahrspurwechsel sowie einem oder mehrerer beteiligter Fahrzeuge sein.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden kann, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

## Patentansprüche

1. Computerimplementiertes Verfahren zum Approximieren von Testergebnissen eines virtuellen Tests einer Vorrichtung zur zumindest teilweisen autonomen Führung eines Kraftfahrzeugs, mit den Schritten:
Empfangen (S1) eines ersten Datensatzes (DS1a, DS1b, DS1c) umfassend eine Mehrzahl von Fahrsituationsparametern bestehend aus die Umgebung des Kraftfahrzeugs beschreibenden Umgebungsparametern (FP1, FP2) und den Zustand des Kraftfahrzeugs beschreibenden Egoparametern (FP3), wobei jeder Fahrsituationsparameter einen vorgegebenen Definitionsbereich aufweist;
Approximieren (S2) eines numerischen Wertebereichs (WB1, WB2, WB3) einer Zielfunktion (F1, F2, F3) für den Definitionsbereich zumindest eines Fahrsituationsparameters unter Verwendung eines trainierten, künstlichen neuronalen Netzes (K1, K2, K3), welches auf die Mehrzahl von Fahrsituationsparametern angewendet wird, wobei die Zielfunktion (F1, F2, F3) ein Fahrmanöver des Kraftfahrzeugs in Reaktion auf eine durch die Mehrzahl von Fahrsituationsparametern des Definitionsbereichs erzeugten Steuerung der Vorrichtung repräsentiert; und
Bereitstellen (S3) eines zweiten Datensatzes (DS2a, DS2b, DS2c) bestehend aus dem numerischen Wertebereich (WB1, WB2, WB3) der Zielfunktion (F1, F2, F3) und dem zugeordneten Definitionsbereich des zumindest einen Fahrsituationsparameters.

2. Computerimplementiertes Verfahren nach Anspruch 1, **dadurch gekennzeichnet, dass** die Egoparameter (FP3) eine Geschwindigkeit (V_{EGO}) des Kraftfahrzeugs und die Umgebungsparameter (FP1, FP2) eine Geschwindigkeit (V_{FELLOW}) eines weiteren Kraftfahrzeugs und einen Abstand (d_{SPUR}) zwischen dem Kraftfahrzeug und dem weiteren Kraftfahrzeug umfassen.

3. Computerimplementiertes Verfahren nach Anspruch 2, **dadurch gekennzeichnet, dass** die Zielfunktion (F1) eine Sicherheits-Zielfunktion ist, welche einen numerischen Wert aufweist, der bei einem Sicherheitsabstand zwischen dem Kraftfahrzeug und dem weiteren Kraftfahrzeug von ≥ V_{FELLOW} x 0,55 einen Minimalwert aufweist, bei einer Kollision zwischen dem Kraftfahrzeug und dem weiteren Kraftfahrzeug einen Maximalwert aufweist, und bei einem Sicherheitsabstand zwischen dem Kraftfahrzeug und dem weiteren Kraftfahrzeug von ≤ V_{FELLOW} x 0,55 einen Wert aufweist, welcher größer als der Minimalwert ist.

4. Computerimplementiertes Verfahren nach Anspruch 2 oder 3, **dadurch gekennzeichnet, dass** die Zielfunktion (F2, F3) eine Comfort-Zielfunktion oder eine Energieverbrauchs-Zielfunktion ist, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit eines Betrags der Änderung der Beschleunigung einen Wert zwischen dem Minimalwert und dem Maximalwert aufweist.

5. Computerimplementiertes Verfahren nach einem der Ansprüche 2 bis 4, **dadurch gekennzeichnet, dass** die Mehrzahl von Fahrsituationsparametern, insbesondere die Geschwindigkeit (V_{EGO}) des Kraftfahrzeugs und die Geschwindigkeit (V_{FELLOW}) des weiteren Kraftfahrzeugs, innerhalb des vorgegebenen Definitionsbereiches durch einen Zufallsalgorithmus erzeugt werden.

6. Computerimplementiertes Verfahren nach einem der vorhergehenden Ansprüche, **dadurch gekennzeichnet, dass** zum Approximieren des numerischen Wertebereichs (WB1, WB2, WB3) jeder Zielfunktion (F1, F2, F3) ein separates künstliches neuronales Netz (K1, K2, K3) verwendet wird, wobei individuelle Hyperparameter jedes künstlichen neuronalen Netzes (K1, K2, K3) in einer Datenbank hinterlegt sind.

7. Computerimplementiertes Verfahren nach einem der vorhergehenden Ansprüche, **dadurch gekennzeichnet, dass** das künstliche neuronale Netz (K1, K2, K3) in Abhängigkeit der Zielfunktion (F1, F2, F3) zwischen 2 bis 15 Schichten, zwischen 6 und 2048 Neuronen pro Schicht und als Aktivierungsfunktion ReLU, LeakyReLU oder ELU verwendet.

8. Computerimplementiertes Verfahren nach einem der vorhergehenden Ansprüche, **dadurch gekennzeichnet, dass** der zweite Datensatz (DS2a, DS2b, DS2c) bestehend aus dem numerischen Wertebereich (WB1, WB2, WB3) der Zielfunktion (F1, F2, F3) und dem zugeordneten Definitionsbereich des zumindest einen Fahrsituationsparameters in Abhängigkeit einer Anzahl von Fahrsituationsparametern zweidimensional oder dreidimensional graphisch darstellbar ist.

9. Computerimplementiertes Verfahren zum Bereitstellen eines trainierten, künstlichen neuronalen Netzes (K1, K2, K3) zum Approximieren von Testergebnissen eines virtuellen Tests einer Vorrichtung zur zumindest teilweisen autonomen Führung eines Kraftfahrzeugs, mit den Schritten:
Empfangen (S1') eines ersten Datensatzes (DS1a', DS1b', DS1c') von Eingabe-Trainingsdaten umfassend eine Mehrzahl von Fahrsituationsparametern bestehend aus die Umgebung des Kraftfahrzeugs beschreibenden Umgebungsparametern (FP1, FP2) und den Zustand des Kraftfahrzeugs beschreibenden Egoparametern (FP3), wobei jeder Fahrsituationsparameter einen vorgegebenen Definitionsbereich aufweist;
Empfangen (S2') eines zweiten Datensatzes (DS2a', DS2b', DS2c') von Ausgabe-Trainingsdaten bestehend aus dem numerischen Wertebereich (WB1, WB2, WB3) der Zielfunktion (F1, F2, F3) und dem zugeordneten Definitionsbereich des zumindest einen Fahrsituationsparameters, wobei die Ausgabe-Trainingsdaten mit den Eingabe-Trainingsdaten in Beziehung stehen;
Trainieren (S3') des künstlichen neuronalen Netzes zum Approximieren eines numerischen Wertebereichs (WB1, WB2, WB3) der Zielfunktion (F1, F2, F3) für den Definitionsbereich zumindest eines Fahrsituationsparameters, wobei die Zielfunktion (F1, F2, F3) ein Fahrmanöver des Kraftfahrzeugs in Reaktion auf eine durch die Mehrzahl von Fahrsituationsparametern des Definitionsbereichs erzeugten Steuerung der Vorrichtung repräsentiert, basierend auf den Eingabe-Trainingsdaten und den Ausgabe-Trainingsdaten mit einer Trainingsberechnungseinheit (20); und
Bereitstellen (S4') des trainierten, künstlichen neuronalen Netzes (K1, K2, K3) zum Approximieren von Testergebnissen des virtuellen Tests der Vorrichtung zur zumindest teilweisen autonomen Führung des Kraftfahrzeugs.

10. Computerimplementiertes Verfahren nach Anspruch 9, **dadurch gekennzeichnet, dass** die Mehrzahl von Fahrsituationsparametern, insbesondere die Geschwindigkeit (V_{EGO}) des Kraftfahrzeugs und die Geschwindigkeit (V_{FELLOW}) des weiteren Kraftfahrzeugs, innerhalb des vorgegebenen Definitionsbereiches durch einen Zufallsalgorithmus und/oder durch eine Simulation erzeugt werden.

11. Computerimplementiertes Verfahren nach Anspruch 9 oder 10, **dadurch gekennzeichnet, dass** das künstliche neuronale Netz (K1, K2, K3) durch Gewichtungseinstellungen einer Mehrzahl von Datensätzen von Fahrsituationsparametern unter Verwendung einer Gradientenabstiegs-Rückpropagation (S3a'), insbesondere unter Verwendung des Adam Optimierungsverfahrens trainiert wird.

12. Testeinheit (1) zum Approximieren von Testergebnissen eines virtuellen Tests einer Vorrichtung zur zumindest teilweisen autonomen Führung eines Kraftfahrzeugs, umfassend:
Mittel (10) zum Empfangen eines ersten Datensatzes (DS1a, DS1b, DS1c) umfassend eine Mehrzahl von Fahrsituationsparametern bestehend aus die Umgebung des Kraftfahrzeugs beschreibenden Umgebungsparametern und den Zustand des Kraftfahrzeugs beschreibenden Egoparametern, wobei jeder Fahrsituationsparameter einen vorgegebenen Definitionsbereich aufweist;
Mittel (12) zum Approximieren eines numerischen Wertebereichs (WB1, WB2, WB3) einer Zielfunktion (F1, F2, F3) für den Definitionsbereich zumindest eines Fahrsituationsparameters unter Verwendung eines trainierten, künstlichen neuronalen Netzes (K1, K2, K3), welches auf die Mehrzahl von Fahrsituationsparametern angewendet wird, wobei die Zielfunktion (F1, F2, F3) ein Fahrmanöver des Kraftfahrzeugs in Reaktion auf eine durch die Mehrzahl von Fahrsituationsparametern des Definitionsbereichs erzeugten Steuerung der Vorrichtung repräsentiert; und
Mittel (14) zum Bereitstellen eines zweiten Datensatzes (DS2a, DS2b, DS2c) bestehend aus dem numerischen Wertebereich (WB1, WB2, WB3) der Zielfunktion (F1, F2, F3) und dem zugeordneten Definitionsbereich des zumindest einen Fahrsituationsparameters.

13. Testeinheit nach Anspruch 12, **dadurch gekennzeichnet, dass** eine der Approximation der Testergebnisse des virtuellen Tests der, insbesondere als Steuereinheit ausgebildeten, Vorrichtung zugrundeliegende Fahrsituation ein Spurwechsel eines weiteren Kraftfahrzeugs in eine Fahrspur des Kraftfahrzeugs unter Verwendung der Mehrzahl von Fahrsituationsparametern ist.

14. Computerprogramm mit Programmcode, um das Verfahren nach einem der Ansprüche 1 bis 8 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 8 durchzuführen, wenn das Computerprogramm auf einem Computer ausgeführt wird.

## Claims

1. A computer-implemented method for approximating test results of a virtual test of a device for at least partially autonomously guiding a motor vehicle, having the steps:
receiving (S1) a first data set (DS1a, DS1b, DS1c) comprising a plurality of driving situation parameters consisting of environmental parameters (FP1, FP2) describing the environment of the motor vehicle and ego parameters (FP3) describing the state of the motor vehicle, each driving situation parameter comprising a specified definition range;
approximating (S2) a numerical value range (WB1, WB2, WB3) of a target function (F1, F2, F3) for the definition range of at least one driving situation parameter using a trained artificial neural network (K1, K2, K3) applied to the plurality of driving situation parameters, the target function (F1, F2, F3) representing a driving maneuver of the motor vehicle in response to a control of the device generated by the plurality of driving situation parameters of the definition range; and
providing (S3) a second data set (DS2a, DS2b, DS2c) consisting of the numerical value range (WB1, WB2, WB3) of the target function (F1, F2, F3) and the associated definition range of the at least one driving situation parameter.

2. The computer-implemented method according to claim 1, **characterized in that** the ego parameters (FP3) are a speed (V_{EGO}) of the motor vehicle and the environmental parameters (FP1, FP2) are a speed (V_{FELLOW}) of another motor vehicle and a distance (d_{SPUR}) between the motor vehicle and the other motor vehicle.

3. The computer-implemented method according to claim 2, **characterized in that** the target function (F1) is a safety target function having a numerical value having a minimum value at a safety distance between the motor vehicle and the other motor vehicle of ≥ V_{FELLOW} x 0.55, having a maximum value in the event of a collision between the motor vehicle and the other motor vehicle, and having a value greater than the minimum value at a safety distance between the motor vehicle and the other motor vehicle of ≤ V_{FELLOW} x 0.55.

4. The computer-implemented method according to claim 2 or 3, **characterized in that** the target function (F2, F3) is a comfort target function or an energy consumption target function having a numerical value having a minimum value in the event of no change in the acceleration of the motor vehicle, a maximum value in the event of a collision between the motor vehicle and the other motor vehicle, and a value between the minimum value and the maximum value in the event of a change in the acceleration of the motor vehicle depending on the amount of the change in acceleration.

5. The computer-implemented method according to any one of claims 2 to 4, **characterized in that** the plurality of driving situation parameters, in particular the speed (V_{EGO}) of the motor vehicle and the speed (V_{FELLOW}) of the other motor vehicle, are generated within the specified definition range using a random algorithm.

6. The computer-implemented method according to any one of the preceding claims, **characterized in that** a separate artificial neural network (K1, K2, K3) is used to approximate the numerical value range (WB1, WB2, WB3) of each target function (F1, F2, F3), wherein individual hyperparameters of each artificial neural network (K1, K2, K3) are stored in a database.

7. The computer-implemented method according to any one of the preceding claims, **characterized in that** the artificial neural network (K1, K2, K3) comprises between 2 and 15 layers and between 6 and 2048 neurons per layer depending on the target function (F1, F2, F3), and ReLU, LeakyReLU or ELU is used as an activation function.

8. The computer-implemented method according to any one of the preceding claims, **characterized in that** the second data set (DS2a, DS2b, DS2c) consisting of the numerical value range (WB1, WB2, WB3) of the target function (F1, F2, F3) and the associated definition range of the at least one driving situation parameter can be displayed graphically in two or three dimensions depending on a number of driving situation parameters.

9. A computer-implemented method for providing a trained, artificial neural network (K1, K2, K3) for approximating test results of a virtual test of a device for at least partially autonomously guiding a motor vehicle, having the steps:
receiving (S1') a first data set (DS1a', DS1b', DS1c') of input training data comprising a plurality of driving situation parameters consisting of environmental parameters (FP1, FP2) describing the environment of the motor vehicle and ego parameters (FP3) describing the state of the motor vehicle, each driving situation parameter having a specified definition range;
receiving (S2') a second data set (DS2a', DS2b', DS2c') of output training data consisting of the numerical value range (WB1, WB2, WB3) of the target function (F1, F2, F3) and the associated definition range of the at least one driving situation parameter, the output training data being related to the input training data;
training (S3') the artificial neural network for approximating a numerical value range (WB1, WB2, WB3) of the target function (F1, F2, F3) for the definition range of at least one driving situation parameter, the target function (F1, F2, F3) representing a driving maneuver of the motor vehicle in response to a control of the device generated by the plurality of driving situation parameters of the definition range, based on the input training data and the output training data, by means of a training calculation unit (20); and
providing (S4') the trained, artificial neural network (K1, K2, K3) for approximating test results of the virtual test of the device for at least partially autonomously guiding the motor vehicle.

10. The computer-implemented method according to claim 9, **characterized in that** the plurality of driving situation parameters, in particular the speed (V_{EGO}) of the motor vehicle and the speed (V_{FELLOW}) of the other motor vehicle, are generated within the specified definition range by a random algorithm and/or by a simulation.

11. The computer-implemented method according to claim 9 or 10, **characterized in that** the artificial neural network (K1, K2, K3) is trained by weighting settings of a plurality of data sets of driving situation parameters using a gradient descent back propagation (S3a'), in particular using the Adam optimization method.

12. A test unit (1) for approximating test results of a virtual test of a device for at least partially autonomously guiding a motor vehicle, comprising:
means (10) for receiving a first data set (DS1a, DS1b, DS1c) comprising a plurality of driving situation parameters consisting of environmental parameters describing the environment of the motor vehicle and ego parameters describing the state of the motor vehicle, each driving situation parameter having a specified definition range;
means (12) for approximating a numerical value range (WB1, WB2, WB3) of a target function (F1, F2, F3) for the definition range of at least one driving situation parameter using a trained artificial neural network (K1, K2, K3) applied to the plurality of driving situation parameters, the target function (F1, F2, F3) representing a driving maneuver of the motor vehicle in response to a control of the device generated by the plurality of driving situation parameters of the definition range; and
means (14) for providing a second data set (DS2a, DS2b, DS2c) consisting of the numerical value range (WB1, WB2, WB3) of the target function (F1, F2, F3) and the associated definition range of the at least one driving situation parameter.

13. The test unit according to claim 12, **characterized in that** a driving situation underlying the approximating of the test results of the virtual test of the device particularly implemented as a control unit is a lane change of another motor vehicle into a driving lane of the motor vehicle using the plurality of driving situation parameters.

14. A computer program having program code for performing the method according to any one of the claims 1 through 8 when the computer program is executed on a computer.

15. A computer-readable data storage medium having program code of a computer program for performing the method according to any one of the claims 1 through 8 when the computer program is executed on a computer.

## Revendications

1. Procédé mis en œuvre par ordinateur pour l'approximation de résultats de test d'un test virtuel d'un dispositif destiné au guidage au moins partiellement autonome d'un véhicule à moteur, comprenant les étapes suivantes:
réception (S1) d'un premier ensemble de données (DS1a, DS1b, DS1c) comprenant une pluralité de paramètres de situation de conduite constitués de paramètres d'environnement (FP1, FP2) décrivant l'environnement du véhicule à moteur et de paramètres propres (FP3) décrivant l'état du véhicule à moteur, chaque paramètre de situation de conduite présentant une plage de définition prédéfinie;
approximation (S2) d'une plage de valeurs numériques (WB1, WB2, WB3) d'une fonction cible (F1, F2, F3) pour la plage de définition d'au moins un paramètre de situation de conduite par utilisation d'un réseau neuronal artificiel (K1, K2, K3) entraîné qui est appliqué à la pluralité de paramètres de situation de conduite, la fonction cible (F1, F2, F3) représentant une manœuvre de conduite du véhicule à moteur en réaction à une commande du dispositif générée par la pluralité de paramètres de situation de conduite de la plage de définition; et
fourniture (S3) d'un deuxième ensemble de données (DS2a, DS2b, DS2c) constitué de la plage de valeurs numériques (WB1, WB2, WB3) de la fonction cible (F1, F2, F3) et de la plage de définition associée de l'au moins un paramètre de situation de conduite.

2. Procédé mis en œuvre par ordinateur selon la revendication 1, **caractérisé en ce que** les paramètres propres (FP3) comprennent une vitesse (V_{EGO}) du véhicule à moteur et les paramètres d'environnement (FP1, FP2) comprennent une vitesse (V_{FELLOW}) d'un véhicule à moteur supplémentaire et une distance (d_{SPUR}) entre le véhicule à moteur et le véhicule à moteur supplémentaire.

3. Procédé mis en œuvre par ordinateur selon la revendication 2, **caractérisé en ce que** la fonction cible (F1) est une fonction cible de sécurité qui présente une valeur numérique, laquelle présente une valeur minimale dans le cas d'une distance de sécurité entre le véhicule à moteur et le véhicule à moteur supplémentaire de ≥ V_{FELLOW} x 0,55, présente une valeur maximale dans le cas d'une collision entre le véhicule à moteur et le véhicule à moteur supplémentaire et présente une valeur qui est supérieure à la valeur minimale dans le cas d'une distance de sécurité entre le véhicule à moteur et le véhicule à moteur supplémentaire de ≤ V_{FELLOW} x 0,55.

4. Procédé mis en œuvre par ordinateur selon la revendication 2 ou 3, **caractérisé en ce que** la fonction cible (F2, F3) est une fonction cible de confort ou une fonction cible de consommation d'énergie qui présente une valeur numérique, laquelle, en l'absence de modification de l'accélération du véhicule à moteur, présente une valeur minimale, présente une valeur maximale dans le cas d'une collision entre le véhicule à moteur et le véhicule à moteur supplémentaire et présente une valeur comprise entre la valeur minimale et la valeur maximale en fonction d'une valeur de la modification de l'accélération dans le cas d'une modification de l'accélération du véhicule à moteur.

5. Procédé mis en œuvre par ordinateur selon l'une des revendications 2 à 4, **caractérisé en ce que** la pluralité de paramètres de situation de conduite, en particulier la vitesse (V_{EGO}) du véhicule à moteur et la vitesse (V_{FELLOW}) du véhicule à moteur supplémentaire, sont générés par un algorithme aléatoire à l'intérieur de la plage de définition prédéfinie.

6. Procédé mis en œuvre par ordinateur selon l'une des revendications précédentes, **caractérisé en ce qu'**un réseau neuronal artificiel (K1, K2, K3) séparé est utilisé pour l'approximation de la plage de valeurs numériques (WB1, WB2, WB3) de chaque fonction cible (F1, F2, F3), des hyperparamètres individuels de chaque réseau neuronal artificiel (K1, K2, K3) étant stockés dans une base de données.

7. Procédé mis en œuvre par ordinateur selon l'une des revendications précédentes, **caractérisé en ce que** le réseau neuronal artificiel (K1, K2, K3) utilise, en fonction de la fonction cible (F1, F2, F3), entre 2 et 15 couches, entre 6 et 2 048 neurones par couche et comme fonction d'activation ReLU, LeakyReLU ou ELU.

8. Procédé mis en œuvre par ordinateur selon l'une des revendications précédentes, **caractérisé en ce que** le deuxième ensemble de données (DS2a, DS2b, DS2c) constitué de la plage de valeurs numériques (WB1, WB2, WB3) de la fonction cible (F1, F2, F3) et de la plage de définition associée de l'au moins un paramètre de situation de conduite peut être représenté graphiquement en deux dimensions ou en trois dimensions en fonction d'un nombre de paramètres de situation de conduite.

9. Procédé mis en œuvre par ordinateur pour la mise à disposition d'un réseau neuronal artificiel entraîné (K1, K2, K3) destiné à l'approximation de résultats de test d'un test virtuel d'un dispositif destiné au guidage au moins partiellement autonome d'un véhicule à moteur, comprenant les étapes suivantes:
réception (S1') d'un premier ensemble de données (DS1a',
DS1b', DS1c') de données d'entraînement d'entrée comprenant une pluralité de paramètres de situation de conduite constitués de paramètres d'environnement (FP1, FP2) décrivant l'environnement du véhicule à moteur et de paramètres propres (FP3) décrivant l'état du véhicule à moteur, chaque paramètre de situation de conduite présentant une plage de définition prédéfinie;
réception (S2') d'un deuxième ensemble de données (DS2a', DS2b', DS2c') de données d'entraînement de sortie constitué de la plage de valeurs numériques (WB1, WB2, WB3) de la fonction cible (F1, F2, F3) et de la plage de définition associée de l'au moins un paramètre de situation de conduite, les données d'entraînement de sortie étant en relation avec les données d'entraînement d'entrée;
entraînement (S3') du réseau neuronal artificiel pour l'approximation d'une plage de valeurs numériques (WB1, WB2, WB3) de la fonction cible (F1, F2, F3) pour la plage de définition d'au moins un paramètre de situation de conduite, la fonction cible (F1, F2, F3) représentant une manœuvre de conduite du véhicule à moteur en réaction à une commande du dispositif générée par la pluralité de paramètres de situation de conduite de la plage de définition, sur la base des données d'entraînement d'entrée et des données d'entraînement de sortie à l'aide d'une unité de calcul d'entraînement (20); et
fourniture (S4') du réseau neuronal artificiel (K1, K2, K3) entraîné pour l'approximation de résultats de test du test virtuel du dispositif destiné au guidage au moins partiellement autonome du véhicule à moteur.

10. Procédé mis en œuvre par ordinateur selon la revendication 9, **caractérisé en ce que** la pluralité de paramètres de situation de conduite, en particulier la vitesse (V_{EGO}) du véhicule à moteur et la vitesse (V_{FELLOW}) du véhicule à moteur supplémentaire, sont générés par un algorithme aléatoire et/ou par une simulation à l'intérieur de la plage de définition prédéfinie.

11. Procédé mis en œuvre par ordinateur selon la revendication 9 ou 10, **caractérisé en ce que** le réseau neuronal artificiel (K1, K2, K3) est entraîné par des réglages de pondération d'une pluralité d'ensembles de données de paramètres de situation de conduite par utilisation d'une rétropropagation de descente de gradient (S3a'), en particulier par utilisation de la méthode d'optimisation d'Adam.

12. Unité de test (1) pour l'approximation de résultats de test d'un test virtuel d'un dispositif destiné au guidage au moins partiellement autonome d'un véhicule à moteur, comprenant:
des moyens (10) pour recevoir un premier ensemble de données (DS1a, DS1b, DS1c) comprenant une pluralité de paramètres de situation de conduite constitués de paramètres d'environnement décrivant l'environnement du véhicule à moteur et de paramètres propres décrivant l'état du véhicule à moteur, chaque paramètre de situation de conduite présentant une plage de définition prédéfinie;
des moyens (12) pour l'approximation d'une plage de valeurs numériques (WB1, WB2, WB3) d'une fonction cible (F1, F2, F3) pour la plage de définition d'au moins un paramètre de situation de conduite par utilisation d'un réseau neuronal artificiel (K1, K2, K3) entraîné qui est appliqué à la pluralité de paramètres de situation de conduite, la fonction cible (F1, F2, F3) représentant une manœuvre de conduite du véhicule à moteur en réaction à une commande du dispositif générée par la pluralité de paramètres de situation de conduite de la plage de définition; et
des moyens (14) pour mettre à disposition un deuxième ensemble de données (DS2a, DS2b, DS2c) constitué de la plage de valeurs numériques (WB1, WB2, WB3) de la fonction cible (F1, F2, F3) et de la plage de définition associée de l'au moins un paramètre de situation de conduite.

13. Unité de test selon la revendication 12, **caractérisée en ce qu'**une situation de conduite qui est à la base de l'approximation des résultats de test du test virtuel du dispositif, réalisé en particulier comme unité de commande, est un changement de voie d'un véhicule à moteur supplémentaire dans une voie de circulation du véhicule à moteur par utilisation de la pluralité de paramètres de situation de conduite.

14. Programme informatique comprenant un code de programme pour mettre en œuvre le procédé selon l'une des revendications 1 à 8 lorsque le programme informatique est exécuté sur un ordinateur.

15. Support de données lisible par ordinateur avec code de programme d'un programme informatique, pour mettre en œuvre le procédé selon l'une des revendications 1 à 8 lorsque le programme informatique est exécuté sur un ordinateur.
